# EUROPÄISCHE PATENTSCHRIFT

(11) **EP 1 352 440 B1**
(45) Veröffentlichungstag und Bekanntmachung des Hinweises auf die Patenterteilung: **29.10.2008**
(21) Anmeldenummer: 01997860.0
(22) Anmeldetag: 06.11.2001
(51) Int. Cl.: H01M 8/04, H01M 8/06

(54) **BRENNSTOFFZELLENSTAPEL MIT KREISLAUFFÜHRUNG**
FUEL CELL STACK WITH CIRCUIT
EMPILEMENT DE PILES COMBUSTIBLE COMPRENANT UN CIRCUIT

(30) Priorität: 21.11.2000 DE 10057679
(43) Veröffentlichungstag der Anmeldung: 15.10.2003
(73) Patentinhaber: Forschungszentrum Jülich GmbH, 52425 Jülich (DE)
(72) Erfinder: STOLTEN, Detlef, 52076 Aachen (DE); DOHLE, Hendrik, 52224 Stolberg (DE); MERGEL, Jürgen, 52428 Jülich (DE); BALTRUSCHAT, Helmut, 53117 Bonn (DE)
(86) Internationale Anmeldenummer: PCT/DE2001/004195
(87) Internationale Veröffentlichungsnummer: WO 2002/043174

(56) Entgegenhaltungen:
- WO-A-00/16425
- US-A- 3 653 969
- PATENT ABSTRACTS OF JAPAN vol. 015, no. 183 (E-1065), 10 May 1991 (1991-05-10) & JP 03 043964 A (HITACHI LTD), 25 February 1991 (1991-02-25)

## Beschreibung

Die Erfindung betrifft einen Brennstoffzellenstapel, bei dem der Brennstoff zumindest teilweise im Kreislauf geführt wird.

### Stand der Technik

Eine Brennstoffzelle weist eine Kathode, einen Elektrolyten sowie eine Anode auf. Bei einer Wasserstoff-Brennstoffzelle wird, der Kathode ein Oxidationsmittel, beispielsweise in Form von Luft, und der Anode ein Brennstoff, z. B. in Form von Wasserstoff zugeführt.

Mehrere Brennstoffzellen werden in der Regel zur Erzielung großer elektrischer Leistungen durch verbindende Elemente elektrisch und mechanisch miteinander verbunden. Mittels bipolarer Platten entstehen übereinander gestapelte, elektrisch in Serie geschaltete Brennstoffzellen. Diese Anordnung wird Brennstoffzellenstapel genannt. Dieser besteht aus den bipolaren Platten und den Elektroden-Elektrolyt-Einheiten.

Aus der Literatur sind Brennstoffzellen und Brennstoffzellenstapel bekannt, die neben den Zu- und Abführungskanälen für die Betriebsmittel über eine zusätzliche Kreislaufführung des Brennstoffs (anodenseitige Kreislaufführung) verfügen. Das bedeutet, daß der den Anodenräumen zugeführte Brennstoff, der regelmäßig nicht vollständig elektrochemisch umgewandelt wird, wenigstens teilweise im Kreislauf geführt wird. Dadurch kann der Brennstoff effektiver genutzt werden. Zur Durchführung der Kreislaufführung ist typischerweise ein Umwälztank mit einer Umwälzpumpe vorgesehen.

Bei einer Direkt-Methanol-Brennstoffzelle wird der Brennstoff in Form einer Methanol-Wasser-Mischung zugegeben. Bei einer anodenseitigen Kreislaufführung des Brennstoffs wird die abgereicherte, d. h. teilweise umgesetzte Methanol-Wasser-Mischung aus den Anodenräumen abgezogen. Ein Teil dieser Mischung wird abgeführt. Der restliche Teil wird durch Zugabe von reinem Methanol wieder auf die Ausgangskonzentration eingestellt. Die so gebildete Methanol-Wasser-Mischung kann anschließend wieder den Brennstoffzellen zugeführt werden.

Es hat sich herausgestellt, daß es bei einer Direkt-Methanol-Brennstoffzelle neben der erwünschten elektrochemischen Umsetzung des Brennstoffs an der Anode auch zu unerwünschten Nebenreaktionen kommt.
Die durch diese Nebenreaktionen entstehenden Nebenprodukte werden typischerweise zunächst mit dem nicht umgesetzten Brennstoff aus der Brennstoffzelle abgeführt. Bei einer anodenseitigen Kreislaufführung werden diese gebildeten Nebenprodukte jedoch mit der Zeit im Kreislauf aufkonzentriert. Als typische Nebenprodukte treten insbesondere Formaldehyd und Ameisensäure auf. Durch die Aufkonzentrierung stellen diese Nebenprodukte regelmäßig erhöhte Anforderungen an die Materialien der Brennstoffzelle und beeinträchtigen die Dauerhaltbarkeit der Brennstoffzelle negativ. Dies führt insbesondere zu einer verringerten Wirtschaftlichkeit des Systems. Gleichzeitig wird die Potentialeinstellung an der Anode durch das Vorhandensein von Nebenprodukten regelmäßig negativ beeinflußt.

Dokument WO 00/16425 offenbart ein Verfahren zur Behandlung von Kreislauf-Kathodengas.

### Aufgabe und Lösung

Aufgabe der Erfindung ist es, einen Brennstoffzellenstapel mit einer Kreislaufführung zu schaffen, bei der die oben genannten Nachteile vermieden werden können. Ferner ist es Aufgabe der Erfindung, ein Verfahren zum Betreiben eines solchen Brennstoffzellenstapels zur Verfügung zu stellen.

Die Aufgabe der Erfindung wird gelöst durch einen Brennstoffzellenstapel,mit der Gesamtheit der Merkmale des Hauptanspruchs sowie durch ein Verfahren gemäß Nebenanspruch. Vorteilhafte Ausführungsformen sind den jeweils darauf rückbezogenen Unteransprüchen zu entnehmen.

### Gegenstand der Erfindung

Die Erfindung betrifft einen Methanol-Brennstoffzellenstapel mit einer Kreislaufführung des Brennstoffs. Der erfindungsgemäße Brennstoffzellenstapel weist zusätzlich ein Mittel zur Reduzierung der Konzentration wenigstens eines Nebenproduktes im Brennstoffkreislauf auf.
Bei einem Direkt-Methanol-Brennstoffzellenstapel wird als Brennstoff eine Methanol-Wasser-Mischung eingesetzt. Unter einer Kreislaufführung des Brennstoffs ist zu verstehen, daß der nicht vollständig umgesetzte Brennstoff nach Verlassen des Anodenraums wenigstens teilweise wieder zumindest einer Brennstoffzelle des Brennstoffzellenstapels zugeführt wird. Da sich durch die elektrochemische Umsetzung an der Anode die Konzentration an Methanol verringert, wird vorteilhaft durch Zugabe von Methanol die Ausgangskonzentration an Methanol wieder hergestellt, bevor der Brennstoff einer weiteren Brennstoffzelle zugeführt wird.

Als Nebenprodukte werden alle chemischen Verbindungen betrachtet, die sich nicht direkt aus der folgenden Umsetzungsreaktion ergeben:

CH₃OH + H₂O → CO₂ + 6 H⁺ + 6 e⁻

Das bedeutet, alle Verbindungen, außer Wasser, Methanol und CO₂, zählen im Rahmen dieser Erfindung zu den Nebenprodukten. Dazu gehören insbesondere die Verbindungen Formaldehyd (CHOH) und Ameisensäure (CHOOH).,Durch die Kreislaufführung nimmt die Konzentration an diesen Nebenprodukten im Brennstoffkreislauf zu. Ein Mittel zur Reduzierung der Konzentration wenigstens eines der Nebenprodukte ist beispielsweise eine weitere elektrochemische Zelle oder auch ein Adsorber, ein Absorber oder auch ein Filter.

In einer vorteilhaften Ausgestaltung nach Anspruch 2 weist der Brennstoffzellenstapel eine Vorrichtung auf, die wenigstens eines der Nebenprodukte elektrochemisch umzusetzen vermag. Insbesondere weist der erfindungsgemäße Brennstoffzellenstapel eine weitere elektrochemische Zelle nach Anspruch 3 als Vorrichtung zur elektrochemischen Umsetzung wenigstens eines der Nebenprodukte auf.

Vorteilhaft handelt es sich dabei um eine elektrochemische Zelle, die wie eine Direkt-Methanol-Brennstoffzelle aufgebaut ist. Diese wird in geeigneter Weise in dem Brennstoffkreislauf angeordnet. Da die Konzentration an Nebenprodukten im Vergleich zu dem Brennstoff relativ gering ist, kann die elektrochemische Zelle zur Umsetzung der Nebenprodukte regelmäßig deutlich kleiner in der Bauart ausfallen, als die zur Stromerzeugung angeordneten Brennstoffzellen des Stapels.

Im Rahmen der Erfindung wurde gefunden, daß eine Umkehrung der anodischen Reaktionen in einer Brennstoffzelle dazu genutzt werden kann, unerwünschte Nebenprodukte, wie sie bei einem Brennstoffzellenstapel mit Brennstoffkreislauf auftreten, regelmäßig zu reduzieren. Damit ist es möglich, die Konzentration an Nebenprodukten während des Betriebs des Brennstoffzellenstapels gering zu halten und eine Aufkonzentrierung zu vermeiden.

Das erfindungsgemäße Verfahren zum Betreiben eines Direkt-Methanol-Brennstoffzellenstapels mit zumindest teilweiser Kreislaufführung des Brennstoffs umfaßt die folgenden Schritte:
- Brennstoff, der wenigstens ein Nebenprodukt aufweist, wird zumindest teilweise einer weiteren elektrochemischen Zelle zugeführt.
- In dieser weiteren elektrochemischen Zelle wird wenigstens ein Nebenprodukt in einer Reduktionsreaktion zumindest teilweise elektrochemisch umgesetzt.

Dazu wird der nur teilweise umgesetzte Brennstoff, der unerwünschte Nebenprodukte aufweist, in geeigneter Weise einer Vorrichtung zugeführt, in der eine elektrochemische Umsetzung wenigstens eines der Nebenprodukte stattfindet.
Vorteilhaft wird nach Anspruch 6, als eine weitere elektrochemische Zelle, eine Direkt-Methanol-Brennstoffzelle eingesetzt. Hierbei wird, durch Anlegen eines geeigneten Stroms an diese elektrochemische Zelle, die Anodenreaktion der Strom erzeugenden Direkt-Methanol-Brennstoffzelle umgekehrt (Reduktionsreaktion) und damit zumindest ein Nebenprodukt elektrochemisch umgewandelt.

Gemäß Anspruch 7 wird in dieser weiteren elektrochemischen Zelle Methanol produziert. Methanol entsteht durch die elektrochemische Umsetzung eines oder mehrerer Nebenprodukte zusammen mit Wasser als Umkehrung der Anodenreaktion in einem Brennstoffzellenstapel.

Da die Konzentration der Nebenprodukte, verglichen mit der Brennstoffkonzentration im Brennstoffkreislauf, gering ist, kann die zur Umwandlung der Nebenprodukte eingesetzte Brennstoffzelle deutlich kleiner ausfallen, als die Brennstoffzellen, die zur Stromerzeugung in dem Stapel angeordnet sind.

Der an die zusätzliche Brennstoffzelle angelegte Strom führt zur elektrochemischen Umwandlung wenigstens eines Nebenproduktes. Der dazu benötigte Strom ist klein gegenüber dem im Brennstoffzellenstapel erzeugten Strom, so daß die Effektivität des gesamten Systems durch die zusätzliche Brennstoffzelle nur unwesentlich verringert wird. Demgegenüber wird aber, durch die niedrig gehaltenen Konzentrationen an Nebenprodukten in dem Brennstoffkreislauf, das Potential an den Anoden vorteilhaft kaum negativ beeinflußt, und die schädlichen Einflüsse der Nebenprodukte auf die Materialien des Brennstoffzellenstapels werden regelmäßig verhindert.

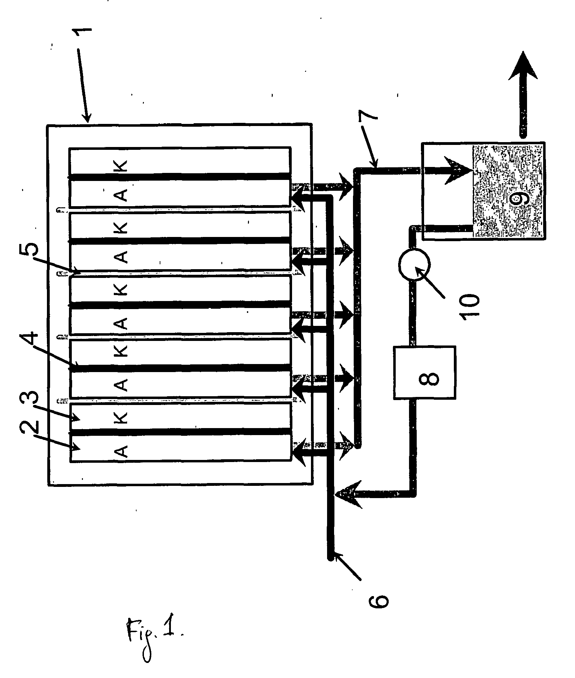

### Legende zur Figur 1:

- 1: Brennstoffzellenstapel
- 2: Anodenraum
- 3: Kathodenraum
- 4: Elektrolyt
- 5: bipolare Platte
- 6: Zuführungskanal für Brennstoff
- 7: Abführungskanal für verbrauchten Brennstoff
- 8: weitere elektrochemische Zelle zur Umwandlung wenigstens eines Nebenproduktes
- 9: Umwälztank
- 10: Umwälzpumpe

## Patentansprüche

1. Direkt-Methanol-Brenngtoffzellenstapel mit wenigstens zwei Brennstoffzellen,
**gekennzeichnet durch**
- eine Kreislaufführung des Brennstoffs und
- ein Mittel zur Reduzierung der Konzentration wenigstens eines Nebenproduktes in dem Brennstoffkreislauf.

2. Brennstoffzellenstapel nach vorhergehendem Anspruch, mit einer Vorrichtung zur elektrochemischen Umwandlung eines Nebenproduktes als Mittel zur Reduzierung der Konzentration an Nebenprodukten.

3. Brennstoffzelle nach einem der vorhergehenden Ansprüche, mit einer weiteren elektrochemischen Zelle als Mittel zur Reduzierung der Konzentration an Nebenprodukten.

4. Brennstoffzelle nach vorhergehendem Anspruch, mit einer elektrochemischen Zelle, die im Aufbau einer Direkt-Methanol-Brennstoffzelle entspricht, als Mittel zur Reduzierung der Konzentration an Nebenprodukten.

5. Verfahren zum Betreiben eines Direkt-Methanol-Brennstoffzellenstapels mit zumindest teilweiser Kreislaufführung des Brennstoffs,
mit den Schritten:
- Brennstoff, umfassend wenigstens ein Nebenprodukt, wird zumindest teilweise einer weiteren elektrochemischen Zelle zugeführt;
- in dieser elektrochemischen Zelle wird wenigstens ein Nebenprodukt in einer Reduktionsreaktion zumindest teilweise elektrochemisch umgesetzt.

6. Verfahren nach vorhergehendem Anspruch, bei dem eine elektrochemische Zelle, die im Aufbau einer Direkt-Methanol-Brennstoffzelle entspricht, als eine weitere elektrochemische Zelle eingesetzt wird.

7. Verfahren nach einem der vorhergehenden Ansprüche 5 bis 6, bei dem die elektrochemische Umsetzungsreaktion in der weiteren elektrochemischen Zelle Methanol erzeugt.

## Claims

1. Direct methanol fuel cell stack having at least two fuel cells,
**characterized by**
- recirculation of the fuel and
- a means for reducing the concentration of at least one by-product in the fuel circuit.

2. Fuel cell stack according to the preceding claim, having an apparatus for electrochemically converting a by-product as the means for reducing the concentration of by-products.

3. Fuel cell stack according to either of the preceding claims, having a further electrochemical cell as the means for reducing the concentration of by-products.

4. Fuel cell stack according to the preceding claim, having an electrochemical cell whose structure corresponds to a direct methanol fuel cell as the means for reducing the concentration of by-products.

5. Method for operating a direct methanol fuel cell stack with at least partial recirculation of the fuel, comprising the following steps:
- fuel, comprising at least one by-product, is at least partially fed to a further electrochemical cell;
- at least one by-product is at least partially electrochemically converted in a reduction reaction in this electrochemical cell.

6. Method according to the preceding claim, in which an electrochemical cell whose structure corresponds to a direct methanol fuel cell is used as a further electrochemical cell.

7. Method according to either of the preceding Claims 5 and 6, in which the electrochemical conversion reaction in the further electrochemical cell produces methanol.

## Revendications

1. Empilement de piles à combustible à méthanol direct comprenant au moins deux piles à combustible,
**caractérisé par**
- une circulation de combustible et
- un moyen pour réduire la concentration en au moins un sous-produit dans la circulation de combustible.

2. Empilement de piles à combustible selon la revendication précédente, comprenant un dispositif pour la conversion électrochimique d'un sous-produit comme moyen pour réduire la concentration en sous-produits.

3. Empilement de piles à combustible selon l'une quelconque des revendications précédentes, comprenant une pile électrochimique additionnelle comme moyen pour réduire la concentration en sous-produits.

4. Pile à combustible selon la revendication précédente, comprenant une pile électrochimique, laquelle correspond, d'un point de vue de la construction, à une pile à combustible à méthanol direct, comme moyen pour réduire la concentration en sous-produits.

5. Procédé d'exploitation d'un empilement de piles à combustible à méthanol direct comprenant au moins une circulation partielle du combustible,
lequel comprend :
- le combustible, comprenant au moins un sous-produit, est au moins partiellement amené vers une pile électrochimique additionnelle ;
- dans cette pile électrochimique, au moins un sous-produit est au moins partiellement converti par voie électrochimique dans une réaction de réduction.

6. Procédé selon la revendication précédente, dans lequel une pile électrochimique, laquelle correspond, d'un point de vue de la construction, à une pile à combustible à méthanol direct, est utilisée comme pile électrochimique additionnelle.

7. Procédé selon l'une quelconque des revendications 5 à 6, dans lequel la réaction de conversion électrochimique a lieu dans le méthanol de la pile électrochimique additionnelle.
